# EUROPÄISCHE PATENTANMELDUNG

(11) **EP 3 132 900 A1**
(43) Veröffentlichungstag der Anmeldung: **22.02.2017**
(21) Anmeldenummer: 15181942.2
(22) Anmeldetag: 21.08.2015
(51) Int. Cl.: B26F 3/00, B26D 5/00, B26D 3/08, A21C 11/10, A21C 11/12

(54) **VERFAHREN UND VORRICHTUNG ZUM EINBRINGEN VON SCHNITTEN IN TEIGLINGE**

(71) Anmelder: Ambrosch, Roland, 1220 Wien (AT); Behringer, Günther, 9493 Mauren (LI)
(72) Erfinder: Ambrosch, Roland, 1220 Wien (AT); Behringer, Günther, 9493 Mauren (LI)
(74) Vertreter: Kaminski Harmann

(57) **Zusammenfassung**

Verfahren und Schneidvorrichtung (20) zum Einbringen von Schnitten bzw. Einritzungen (16) in Teiglinge (14, 15) oder andere Lebensmittel (im Folgenden zusammenfassend als Teiglinge bezeichnet), wobei die zu schneidenden Teiglinge (14, 15) in Förderrichtung (17) der Vorrichtung (20) zugeführt werden; von einer Sensorik (40) der Vorrichtung (20) die Position und Lage der Teiglinge (14, 15) im Raum erfasst und analysiert wird, und das Einritzen bzw. Schneiden durch entsprechende Steuerung (22) eines Schneidorgans (21) der Vorrichtung (20) in seiner Bewegung, Geschwindigkeit und Schneidaktivität in Abhängigkeit der Position und räumlichen Lage der einzelnen Teiglinge (14, 15) erfolgt, bevor die eingeritzten bzw. geschnittenen Teiglinge (14', 15') weiterbefördert werden.

## Beschreibung

Die Erfindung betrifft ein Verfahren und eine Vorrichtung zum Einbringen von Schnitten bzw. Einritzungen in Teiglinge oder andere Lebensmittel.

Bei der Herstellung von Lebensmitteln ist man um eine große Automatisierung bemüht. Dabei gibt es eine Reihe von Bearbeitungsschritten in der industriellen Erzeugung von Lebensmitteln, die ein Verrutschen oder Verschieben der Lebensmittel auf dem Fördersystem bewirken, woraus nachfolgend unterschiedliche Positionierungen und/oder unterschiedliche räumliche Ausrichtungen der Produkte auf dem Fördersystem resultieren. Dies gilt auch für die Produktion von Teigwaren und Gebäck aus Teiglingen. Es gibt Verfahren und Vorrichtungen, die Teiglinge aus einem Teigband abtrennen und vereinzeln, wie es beispielsweise in EP 0722661 A2 offenbart ist. Auch Vorrichtungen zum Einritzen der Oberfläche solcher Teiglinge sind seit langem bekannt.

Zunächst wurde das Einritzen der Oberflächen solcher Teiglinge mit Hilfe von Messerstationen bewerkstelligt, wobei die Teiglinge geordnet in Reihen und Linien unter einer entsprechenden Anzahl Messer der Messerstationen hindurchgefördert wurden und die Messer durch Absenken die Oberfläche der Teiglinge einschnitten bzw. einritzten. Doch die Schneidmesser mussten immer wieder nachgeschärft werden, was als nachteilig angesehen wurde, so dass nach Alternativen gesucht wurde. Es wurden Vorrichtungen und Verfahren zum Einritzen der Oberfläche von Teiglingen mittels eines unter Druck stehenden Schneidfluids (z.B. Wasser oder Speiseöl) entwickelt, wie sie beispielsweise in EP 0722661 A2, EP 0978358 A2 und US 4246838 offenbart sind. Diese Vorrichtungen erlauben das Einschneiden und Durchschneiden von Teig bzw. Teiglingen gemäss vorgegebener Muster, ohne dass Schneidmesser nachgeschärft werden müssen. Der Teig bzw. die Teiglinge werden bei diesen Verfahren mittels einer Fördereinrichtung in Reihen und Linien geordnet kontinuierlich einer Schneidvorrichtung zu und von dieser weg gefördert, wobei die Schneidvorrichtung eine Reihe von im 90°-Winkel zur Förderstrecke nebeneinander angeordneter Spritzdüsen aufweist, die der Abgabe des unter Druck stehenden Schneidfluids dienen. In einer Ausführungsvariante sind die Spritzdüsen in ihrer Position justierbar über der Fördereinrichtung angeordnet - wobei sie dann während des Schneidprozesses fixiert sind (EP 0722661 A2 und US 4246838). In einer anderen Ausführungsvariante dagegen sind die Spritzdüsen für das Schneidfluid zwar ebenfalls im 90°-Winkel zur Förderstrecke in eine Reihe nebeneinander angeordnet, aber sie sind zusätzlich als Reihe lateral im 90°-Winkel zur Förderstrecke verschiebbar (EP 0978358 A2). Für spezielle Schneidmuster ist in EP 0978358 A2 auch ein diskontinuierliches Fördern der Teiglinge vorgesehen unter kontinuierlicher Abgabe des in seinem Fluiddruck regulierbaren Schneidfluids. Die Schneiddüsen der US 4246838 geben dagegen ihr Schneidfluid nur bei der Sensordetektierten Ankunft von Teiglingen im Schneidbereich der Schneiddüsen unter dem immer gleichen Druck von 20-40 lbs. pro inch² ab. In beiden Fällen bedeutet dies einen relativ hohen Fluidverbrauch, wobei das überschüssige Fluid entsprechend entsorgt werden muss.

Die offenbarten Verfahren und Vorrichtungen sind relativ unflexibel gegenüber den oben angesprochenen Positionierungs- und Ausrichtungsverschiebungen, die sich während des Herstellungsprozesses von industriell hergestellten Lebensmitteln ergeben können, so dass sich bei unpräziser Lage der Teigbänder oder der vereinzelten Teiglinge entweder unpräzise Schnittbilder ergeben oder wie dies auch in US 4246838 und EP 0978358 A2 beschrieben ist, durch entsprechende Fassung des Teigs bzw. der Teiglinge einer unpräzisen Lage der Teiglinge und damit einem unpräzisen Schnittbild entgegengewirkt werden muss. So sind die Teiglinge in US 4246838 beispielsweise einzeln in Backformen gefasst und die Teiglinge in EP 0978358 A2 einzeln in Backmulden eines Backblechs, wenn sie der Schneidvorrichtung zugeführt werden. Das Fassen des Teigs bzw. der Teiglinge ist aber gegenüber dem einfachen Auflegen auf ein Fördersystem aufwändig, denn für verschiedene Backwaren mit verschieden geformten Teiglingen (Brot, Brötchen, Baguette) müssen entsprechend unterschiedliche Fassungen, d.h. Backformen bzw. Backbleche mit unterschiedlich ausgeformten Mulden zur Verfügung gestellt werden. Versuche, Teiglinge zu Schneiden bzw. deren Oberflächen einzuritzen ohne solche Fassungen haben gezeigt, dass sich aufgrund unpräziser Lage der Teiglinge ein Ausschuss an unpräzise geschnittenen Teiglingen von bis zu 20%-25% ergibt. Obwohl die bekannten Anlagen also eine Möglichkeit darstellen, in konstanten Fertigungsverfahren ein automatisches Schneiden und/oder Einritzen von Teig, bzw. Teiglingen zu realisieren, ist mit ihnen bei Abweichungen in Positionierung oder Orientierung keine gleichbleibende Schnittqualität umsetzbar.

Aufgabe der vorliegenden Erfindung ist es die oben beschriebenen Nachteile zu beheben.

Wenigstens eine dieser Aufgaben wird gelöst durch ein Verfahren gemäss Anspruch 1 und eine Vorrichtung gemäß Anspruch 10. Merkmale, die die Erfindung in alternativer oder vorteilhafter Weise weiterbilden, sind den abhängigen Patentansprüchen zu entnehmen.

Es hat sich herausgestellt, dass sich nicht nur Lebensmittel aus Teig für Brot, Brötchen, Gebäck usw. mit dem vorgeschlagenen Verfahren bzw. der vorgeschlagenen Vorrichtung schneiden und/oder einritzen lassen, sondern auch nudelartige Nahrungsmittel (z.B. Lasagneblätter, Maultaschen, chinesische Dumplings etc.) und andere Lebensmittel (z.B. Kartoffeln, Gemüse, Tofu, Hamburger). Daher sollen im Folgenden mit dem Begriff "Teigling" zusammenfassend alle Nahrungsmittel bezeichnet werden, die in vereinzelten Portionen (z.B. Kartoffeln, Gemüse, Tofu, Hamburger, Lasagneblätter, Maultaschen) oder in Bändern (aus Nudelteig, Brotteig, Gebäckteig, (Reis, Mais, Weizen usw.) Kartoffelteig, Gemüseteig, Käse, Brät etc.) geschnitten oder eingeritzt werden sollen. Die Begriffe "schneiden" und "einritzen" werden zum Teil synonym füreinander verwendet.

Bei dem erfindungsgemässen Verfahren zum Einbringen von Schnitten bzw. Einritzungen in Teiglinge nach vorgegebenen Mustern werden die Teiglinge einer Schneidvorrichtung mit einem Schneidorgan zugeführt, wobei die Teiglinge detektiert werden und abhängig von der Detektion der Teiglinge eine Schneidaktivität des Schneidorgans ausgelöst wird. Ausserdem wird die Position und räumliche Lage der Teiglinge sensorisch bestimmt und das Schneidorgan abhängig von der Position und der räumlichen Lage der einzelnen Teiglinge so in seiner Bewegung und Schneidaktivität gesteuert, dass alle Teiglinge mit dem für die Teiglinge vorgegebenen Mustern geschnitten bzw. eingeritzt werden. Durch die Bestimmung der Position und räumliche Lage der einzelnen Teiglinge und die auf diese individuellen Positionen und räumlichen Ausrichtungen der Teiglinge abgestimmte Schneidaktivität des Schneidorgans ist es möglich den Ausschuss an unpräzise geschnittenen Teiglingen erheblich zu reduzieren und gegen Null zu bringen.

Die Position und räumliche Lage der Teiglinge wird dabei zwei- oder dreidimensional detektiert, das heisst flächig oder räumlich erfasst. Die flächige oder räumliche Erfassung ist abhängig von der Ausgestaltung der Sensorik der Schneidvorrichtung (s.u.) oder kann, wenn die Vorrichtung prinzipiell eine dreidimensionale Erfassung erlaubt, abhängig von der Beschaffenheit der Teiglinge gewählt werden; für eher flächige Teiglinge genügt in der Regel eine zweidimensionalen Detektion, während eher dreidimensionale Teiglinge, wie beispielsweise jene Teiglinge für Brötchen oder Kastenbrot sinnvoll in ihren drei Dimensionen erfasste werden.

Die zweidimensionale Erfassung erfolgt dabei in der Regel optisch mit Hilfe einer Kamera. Die dreidimensionale Erfassung dagegen entweder durch Stereogrammetrie bzw. analytische Photogrammetrie und also mit Hilfe von wenigstens zwei Kameras, oder z.B. mittels Laserdistanzmessung mit Hilfe einer Laserdistanzmesseinrichtung, oder mittels taktiler Sensoren oder mit einer Kombination dieser Methoden und Messeinrichtungen, also mittels Kamera und taktilen Sensoren oder mittels Kamera und Laserdistanzmesseinrichtung oder mittels Laserdistanzmesseinrichtung und taktilen Sensoren. Taktile Sensoren können aber auch für die Detektion der blossen Ankunft der Teiglinge im Schneidbereich des Schneidorgans oder für die zweidimensionale Erfassung der Teiglinge eingesetzt werden. Als taktile Sensoren eigenen sich beispielsweise Faser- bzw. Gewebesensoren und insbesondere pinselartige Sensoren Vorteilhaft wird z.B. eine Pinselleiste eingesetzt, die sich etwa im 90°-Winkel über das Fördersystem erstreckt, wobei die Haare der Pinselleiste jeweils mit einem Auslenkungs- bzw. Widerstandssensor verbunden sind. Vorteilhaft kann eine solche Pinselleiste zugleich zum Bestreichen der Teiglinge z.B. mit Speiseöl, einer Zucker- oder Salzlösung vorgesehen sein.

Die detektierte Position und räumliche Lage der Teiglinge wird als "Ist-Lage" bestimmt und mit einer vorher festgelegten "Soll-Lage" der Teiglinge verglichen. Dies kann bei einer Lage-Bestimmung mittels Kamera über ein Bilderkennungsprogramm erfolgen oder über einen Abgleich der z.B. taktil oder mittels Laser erfassten x-y(-z)-Koordinaten der detektierten Teiglinge mit für diese gespeicherten x-y(-z)-Koordinaten in einer vorgegebenen Soll-Ordnung. Als Bezugssystem kann bei Bedarf dabei jeweils das Fördersystem dienen, auf welchem die Teiglinge an den Sensoren vorbei- bzw. unter diesen hindurch gefördert werden.

Vorteilhaft werden auch eventuelle Abweichungen in Position und räumlicher Lage inklusive der Grössenordnung der Abweichungen bestimmt. Jene Teiglinge, deren Ist-Lage von der Soll-Lage um weniger als eine vorher festgelegte Grössenordnung abweicht, werden als normale Teiglinge bezeichnet und entsprechend dem vorgegebenen Muster geschnitten bzw. eingeritzt, während abweichende Teiglinge, deren Ist-Lage von der Soll-Lage mehr als die vorher festgelegte Grössenordnung bzw. ein vorgegebener Toleranzwert abweicht, in einem gesonderten Arbeitsschritt durch Schneiden bzw. Einritzen mit dem vorgesehenen Muster versehen werden. Bei einer Abweichung der normalen Teiglinge unterhalb des Schwellwertes, aber um etwa den gleichen Abweichungswert in die gleiche Richtung, ist es denkbar, dass das Schneidorgan feinjustiert wird, um diese Abweichung auszugleichen, so dass nachfolgend das vorgegebene Muster noch genauer in die Teiglinge eingebracht wird.

In besonders bevorzugten Ausführungsformen, bei denen die Schneidmittel des Schneidorgans individuell bewegbar sind, ist es auch denkbar, dass alle Teiglinge gleichzeitig mit genau auf ihre Position und räumliche Lage abgestimmten Schneidaktivität und Bewegungen der Schneidmittel eingeritzt bzw. geschnitten werden.

Für die etwas kostengünstigere Variante ist das Schneidorgan, mit einer Reihe benachbarter, mehr oder weniger fixer Schneidelemente versehen, so dass die darunter hindurch geführten Teiglinge, wenn sie als normale Teiglinge erkannt wurden, mittels der Schneidelemente synchron in einer einheitlichen Schneidbewegung mit dem vorgesehenen Muster versehen werden.

Für den gesonderten Arbeitsschritt wird das Schneidorgan entsprechend einer anhand der Ist-Lage des oder der abweichenden Teiglinge berechneten Unterprogramms gesteuert. Dabei umfasst das Unterprogramm eine anhand der Ist-Lage des oder der abweichenden Teiglinge berechnete, individuelle Trajektorie des Schneidorgans mit entsprechender Bewegungsgeschwindigkeit und Schneidaktivität des oder der passenden Schneidelemente. Je nach Bewegungsmöglichkeit des Schneidorgans und Komplexität der individuell berechneten Trajektorie kann der separate Arbeitsschritt unter kontinuierlicher Weiterförderung der Teiglinge auf dem Fördersystem oder diskontinuierlich unter Anhalten des Fördersystems erfolgen. Ebenfalls denkbar ist es, die abweichenden Teiglinge in eine Zwischenablage zu befördern und dort diskontinuierlich einzuritzen bzw. zu schneiden, während das Fördersystem kontinuierlich weiter fördert.

Vorteilhafterweise ist das Schneidorgan mit einem Manipulator versehen, der ein einzelnes oder auch mehrere einander benachbarte Schneidelemente trägt, so dass sowohl das Einritzen bzw. Schneiden der normalen Teiglinge als auch der gesonderte Arbeitsschritt zum Schneiden bzw. Einritzen der abweichenden Teiglinge von diesem einen Manipulator ausgeführt wird.

In einer alternativen Ausführungsform ist die Vorrichtung für den separaten Arbeitsschritt mit einem Schneidorgan versehen, das einen ersten Manipulator mit einer Reihe benachbarter Schneidelemente und einen zweiten Manipulator mit einem oder mehreren weiteren Schneidelementen aufweist, wobei der gesonderte Arbeitsschritt zum Schneiden bzw. Einritzen der abweichenden Teiglinge von dem separat ansteuerbaren, zweiten Manipulator ausgeführt wird.

Denkbar ist, dass die Schneidelemente als Schneidmesser ausgestaltet sind und also mittels Schneidmessern geschnitten bzw. eingeritzt wird, wobei vorteilhaft insbesondere Messer aus verschliessfesten Materialien wie hochfeste Stähle, Stähle mit hochfest beschichteter Schneide oder Keramikmesser zum Einsatz kommen.

Vorzugsweise wird aber mittels unter Druck stehendem Schneidfluid geschnitten bzw. eingeritzt, wobei die Schneidelemente dann als Schneiddüsen (auch als Spritzdüsen bezeichnet) ausgebildet sind. Wie bereits oben beschrieben, ergibt sich hier in der Regel ein geringerer Wartungsaufwand als beim Schneiden, bzw. einritzen mit Messern.

Beim Schneiden mit unter Druck stehendem Schneidfluid, kommen insbesondere Speiseöl und Wasser als Schneidfluid zum Einsatz, auch Zucker- oder Salzlösungen sind denkbar.

Wird mit einem Schneidfluid geschnitten, ist der Druck des Schneidfluids vorteilhaft auf die Teiglinge bzw. deren Beschaffenheit einstellbar und z.B. über eine oder mehrere Pumpen auch während des Schneidverlaufs veränderlich einstell- und regelbar oder natürlich auch ganz ab- und anstellbar. Auf diese Weise ist es möglich die Menge des benötigten Schneidfluids sehr gering zu halten. Das Schneidfluid wird in der Regel mit einem Druck von 1-10 bar maximal bis 40 bar verspritzt, abhängig von der Beschaffenheit der Teiglinge und davon, ob und wie tief eingeritzt/eingeschnitten werden soll oder ob formgebend etwas vom Teigling oder Band abgeschnitten oder z.B. ein Band durchgeschnitten werden soll (alles, wie oben gesagt, unter dem Begriff "Teigling" zusammengefasst). Zwischen den einzelnen Schneid- bzw. Ritz-Vorgängen ist auch ein komplettes Abstellen des Fluidstroms möglich.

Wird mittels Schneidfluid geschnitten bzw. eingeritzt, sind als Schneidelement im Schneidorgan in der Regel Spritzdüsen vorhanden, aus welchen das Schneidfluid austritt. Die Spritzdüsen, sind in einer Ausführungsform mit variabel verstellbaren Düsenöffnungen versehen, so dass die Form des Fluidstrahls und allenfalls auch der Fluiddruck (über die Durchflussmenge bzw. den Durchflussquerschnitt) einstell- bzw. regelbar sind. In anderen Ausführungsformen sind die Düsenöffnungen in Form und Größe (Durchflussmenge) fix. Vorteilhaft - insbesondere in letzterem Fall - sind die Spritzdüsen auswechselbar, so dass die Strahlgeometrie des Fluidstrahls (Form und Durchmesser) entsprechend der jeweiligen Aufgabenstellung angepasst werden kann. Wenn in den einzelnen Spritzdüsen Ventile vorgesehen sind, erlaubt dies ein An- und Abstellen einzelner Spritzdüsen je nach Bedarf. Ist ein zentrales Ventil in einer Fliudzuleitung zu den Spritzdüsen vorgesehen, so können auf einfache Weise alle Spritzdüsen zugleich an- und abgestellt werden.

Somit kann festgehalten werden, dass eine Schneidvorrichtung zum Einbringen von Schnitten bzw. Einritzungen in Teiglinge nach vorgegebenen Mustern in der Regel ein Schneidorgan mit wenigstens einem Schneidelement umfasst sowie ein Fördersystem zum Fördern der Teiglinge durch einen Schneidbereich des Schneidorgans hindurch; eine Sensorik zur Detektion der Teiglinge und eine Steuereinheit, welche derart konfiguriert ist, dass sie eine Schneidaktivität des Schneidorgans abhängig von der Detektion wenigstens eines Teiglings auslöst. Dabei weist das Schneidorgan wenigstens einen Manipulator mit wenigstens einem Schneidelement auf und die Sensorik ist erfindungsgemäss mit wenigstens einem Sensorelement versehen, mit dessen Hilfe die Position und räumlichen Lage der Teiglinge bestimmbar ist. Die Steuereinheit ist derart konfiguriert, dass das wenigstens eine Schneidelement des Schneidorgans mittels des Manipulators abhängig von der durch die Sensorik bestimmten Positionen und räumlichen Lagen der einzelnen Teiglinge so in seiner Bewegung und Schneidaktivität gesteuert wird, dass alle Teiglinge mit dem für einen Teigling vorgegebenen Muster geschnitten bzw. eingeritzt werden. Diese Ausgestaltung einer Schneidvorrichtung zum Schneiden bzw. Einritzen von Teiglingen ermöglicht es, den Ausschuss an Teiglingen, welche aufgrund ihrer Position und räumlichen Lage ein unpräzises Schnittmuster aufweisen würden, zu minimieren.

In einer vorteilhaften Ausgestaltung der Vorrichtung weist der Manipulator eine Reihe nebeneinander angeordneter Schneidelemente auf. Dies erlaubt das gleichzeitige Schneiden von nebeneinander auf dem Fördersystem durch den Schneidbereich hindurchgeführter Teiglinge.

In einer anderen Ausgestaltung sind zwei Manipulatoren mit je wenigstens einem Schneidelement vorgesehen. Dies erlaubt ein flexibles Schneiden bzw. Einritzen von nicht exakt positionierten und/oder nicht exakt in ihrer räumlichen Lage ausgerichteten Teiglingen

Das wenigstens eine Schneidelement ist vorteilhafter Weise als Spritzdüse ausgebildet, die über wenigstens ein Ventil in flüssigkeitleitendem Kontakt mit einem Flüssigkeitsbehälter steht. Der Flüssigkeitsbehälter dient als Speicher für das Schneidfluid und ist entweder selbst druckbeaufschlagt, so dass das Schneidfluid mit genügend Druck vom Flüssigkeitsbehälter in die Spritzdüse(n) gelangt oder der Flüssigkeitsbehälter ist via eine Förderpumpe flüssigkeitleitend mit der Spritzdüse verbunden, so dass die Förderpumpe für den nötigen Fluiddruck sorgt. Die Druckbeaufschlagung der Flüssigkeitsbehälters bzw. die Förderpumpe und das wenigstens eine Ventil sind mittels der Steuereinheit steuerbar. Trägt ein Manipulator mehrere Spritzdüsen kann ein zentrales Ventil vorgesehen sein. Alternativ oder zusätzlich kann auch jede Spritzdüse ein Ventil aufweisen.

Der oder die Manipulatoren sind in der Regel als Roboter ausgebildet, z.B. als kartesischer Roboter (zum Beispiel mit einem das Fördersystem überspannenden Portal, wobei dieser Roboter dann laterale Bewegungen ausführt mit einem, zwei oder drei Bewegungsfreiheitsgraden), als Knickarmroboter, SCARA Roboter etc., wobei diese Roboter beliebig viele Freiheitsgrade aufweisen können, in der Regel aber bis zu 6 Bewegungsfreiheitsgerade aufweisen. Die Roboter können mit elektrisch, pneumatisch oder hydraulisch angetrieben sein. Die Schneidelemente (Messer oder Schneiddüsen) können zusätzlich in einem Endeffektor des Manipulators (auch als Transportkopf oder als Schneideinheit bezeichnet) verschwenkbar gelagert sein, so dass sich ein zusätzlicher Freiheitsgrad ergibt.

Die Manipulatoren können eigene Steuereinheiten aufweisen, die mit der Steuereinheit der Schneidvorrichtung zur Datenübertragung verbunden sind. Auch die Sensorik kann eine eigene Auswerteeinheit aufweisen in welcher die durch die Sensoren generierten Daten in Positions- und Ausrichtungswerte für die Teiglinge umgerechnet werden. Das heisst mit anderen Worten, die Steuereinheit der Schneidvorrichtung kann als eine zentrale Steuereinheit oder als ein Ensemble dezentraler Steuereinheiten ausgestaltet sein.

Sollen verschiedene Schneidfluide verwendet werden, können verschiedene Behälter für verschiedene Schneidfluide vorgesehen sein und auch eine Spülanlage zur Reinigung aller Leitungen vor dem Wechsel von einem Fluid auf ein anderes.

Entsprechend kann, wo nötig, ein Auffangbehälter für überschüssiges Schneidfluid bzw. eine Wiederaufbereitung für Schneidfluid vorgesehen sein und allenfalls auch ein Auffangbehälter bzw. eine Wiederaufbereitung für ein Spülfluid.

Das erfindungsgemässe Verfahren und Beispiele für Vorrichtungen mit denen das Verfahren ausgeführt werden kann, werden nachfolgend anhand von in den Zeichnungen schematisch dargestellten Ausführungsbeispielen rein beispielhaft näher beschrieben. Gleiche Elemente sind dabei in den Figuren mit gleichen Bezugszeichen gekennzeichnet. Im Einzelnen zeigen die Figuren rein schematisch:
- Fig.1: in Draufsicht eine Anlage in welcher, Teiglinge verarbeitet werden;
- Fig.2: in Seitenansicht eine erste Ausführungsform einer Schneidvorrichtung;
- Fig.3a: in Draufsicht Teiglinge auf einem Fördersystem, welche der Schneidvorrichtung zugeführt werden;
- Fig.3b: in Draufsicht die Teiglinge aus Fg. 3a mit den für das präzise Einbringen eines vorgegebenen Schnittbildes nötigen Trajektorien;
- Fig.4: Beispiele für mögliche Teiglingsformen und Schnittbilder bzw. Muster, mit welchen Teiglinge versehen werden können;
- Fig.5a, 5b: ein Beispiel für eine Sensorik zur Detektion der Teiglinge;
- Fig.6: perspektivisch ein Beispiel für eine Schneidvorrichtung;
- Fig.7: ein Beispiel für eine Spritzdüse;
- Fig.8-12: weitere Beispiele für Schneidvorrichtungen; und
- Fig.13a,13b: ein Beispiel für einen typischen Verfahrensablauf.

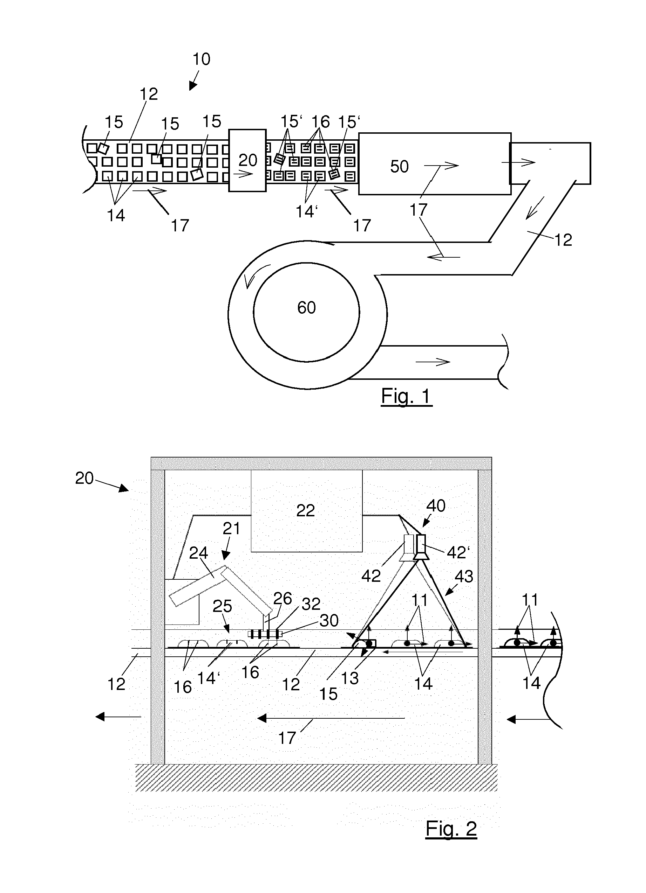

Figur 1 zeigt einen Ausschnitt einer Anlage 10 zur industriellen Herstellung von Lebensmitteln, wobei in diesem Beispiel die Lebensmittel Apfeltaschen sind, also ein Blätterteiggebäck mit Apfelfüllung. Als Beispiel ist ein als Förderband ausgestaltetes Fördersystem 12 mit darauf befindlichen Apfeltaschen in Form von Teiglingen 14, 15, 14', 15' gezeigt sowie eine erfindungsgemässe Schneidvorrichtung 20 zum Schneiden und/oder Einritzen der Teiglinge 14, 15, ein Tunnelofen 50, in dem die mit Einschnitten bzw. Einritzungen 16 versehenen Teiglinge 14', 15' gebacken werden, und dem Tunnelofen 50 nachgeordnet ein Kühl-Spiralturm 60, in dem die gebackenen Teiglinge 14', 15' abgekühlt werden, ehe sie dann weitergefördert werden, beispielsweise zu einer Verpackungsstation (nicht dargestellt). Wie oben gesagt, ist dies ein Ausschnitt einer möglichen Anlage. Es gibt natürlich unendlich viele Möglichkeiten, wie eine solche Anlage ausgestaltet sein kann, je nach dem welche Art von Lebensmittel bzw. Teiglingen (aus Gemüse, Brät, Nudelteig, etc.) verarbeitet werden soll und mit welchem Zweck (Trocknen, Backen, nur Vorbacken, Tieffrieren etc.). Hier geht es nur darum an einem Beispiel zu zeigen, in welcher Weise eine erfindungsgemässe Schneidvorrichtung 20 bzw. ein erfindungsgemässes Verfahren zum Schneiden bzw. Einritzen von Teiglingen 14, 15 in eine industrielle Verarbeitung von Lebensmitteln/Teiglingen eingebunden sein kann.

Wie in Fig. 1 erkennbar, haben die Teiglinge 14, 15, 14', 15' in diesem Beispiel einen mehr oder weniger quadratischen Grundriss. Auf dem Förderband 12 befindet sich eine überwiegende Anzahl normaler Teiglinge 14, 14', die nach einer vorgegebenen Ordnung jeweils mit zwei ihrer Seitenränder parallel zur Förderrichtung 17, geordnet in Reihen und Linien auf dem Förderband 12 liegen, wobei deren Ist-Position etwa einer durch die vorgegebene Ordnung vorgegebenen Soll-Position entspricht. Aber es gibt auch eine kleinere Anzahl abweichender Teiglinge 15, 15' die abweichend von dieser vorgegebenen Ordnung entweder nicht an der Position (Reihe, Linie) liegen, an der sie liegen sollten, und/oder räumlich anders ausgerichtet auf dem Förderband 12 liegen, als dies durch die Ordnung vorgegeben ist. Die Ist-Position dieser abweichenden Teiglinge 15 entspricht also nicht der durch die Ordnung vorgegebenen Soll-Position, wobei die Begriffe Ist-Position bzw. Soll-Position jeweils die Position und die räumliche Ausrichtung zusammenfassen.

Wie aus der Fig. 1 ersichtlich, verlassen alle Teiglinge 14', 15' die erfindungsgemässe Schneidvorrichtung 20 mit zwei zueinander und zu zwei parallelen Seitenrändern der quadratischen Teiglinge parallelen Einschnitten bzw. Einritzungen 16, und zwar unabhängig davon, ob es sich um normale Teiglinge 14' handelt (Ist-Position = Soll-Position) oder um abweichende Teiglinge 15' (Ist-Position ≠ Soll-Position), ohne dass sie in der Schneidvorrichtung 20 in ihrer Ist-Position verändert worden sind.

Eine erste Ausgestaltung einer erfindungsgemässen Schneidvorrichtung 20 zum Schneiden bzw. Einritzen von Teiglingen 14, 15 ist in Fig. 2 gezeigt. Auf einem Fördersystem 12 (z.B. Gitterförderer, Gurtförderband, etc.) werden in Förderrichtung 17 Backbleche 13 oder sogenannte Peelboards® mit Teiglingen 14, 15 der Schneidvorrichtung 20 zugeführt. Die Teiglinge 14, 15 werden in der Schneidvorrichtung 12 zunächst sensorisch erfasst, wobei die Sensorik 40 in diesem Beispiel durch zwei Kameras 42, 42' verwirklicht ist. Mittels Stereometrie wird mittels der zwei Kameras 42, 42' sowohl die Position der Teiglinge 14, 15 auf dem Blech 13 als auch dreidimensional ihre räumliche Ausrichtung (angedeutet durch die Pfeile 11) bestimmt. In dem hier gezeigten Beispiel sind auf dem rechten Backblech 13, welches sich im Sichtbereicht 43 der Kameras 42, 42' befindet, zwei normale Teiglinge 14 dargestellt, deren Position und Ausrichtung einer vorgegebenen Ordnung entsprechen, und ein abweichender Teigling 15, der zwar an der vorgegebenen Position liegt aber dessen Ausrichtung nicht korrekt ist.

Die Sensorik 40 ist über eine - in diesem Fall zentrale - Steuereinheit 22 mit einem Schneidorgan 21 der Schneidvorrichtung 20 verbunden. Das Schneidorgan 21 weist einen Manipulator 24 auf, der in diesem Beispiel als Knickarmroboter ausgebildet ist, und an dessen Transportkopf 26 eine Schneideinheit 30 mit mehreren Schneidelementen 32 angeordnet ist. Denkbar ist freilich auch nur ein Schneidelement 32. Der Manipulator 24 mit Schneideinheit 30 und Schneidelementen 32 deckt mit seinen Bewegungsmöglichkeiten einen Schneidbereich 25 ab, in welchem den Teiglingen 14, 15 mit Hilfe der Schneidelemente 32 Einritzungen bzw. Schnitte 16 zugefügt werden, so dass diese dann als eingeritzte bzw. eingeschnittene Teiglinge 14', 15' (Siehe auch Beispiel Fig. 1) aus der Schneidvorrichtung 20 hinaus und von dieser weg gefördert werden.

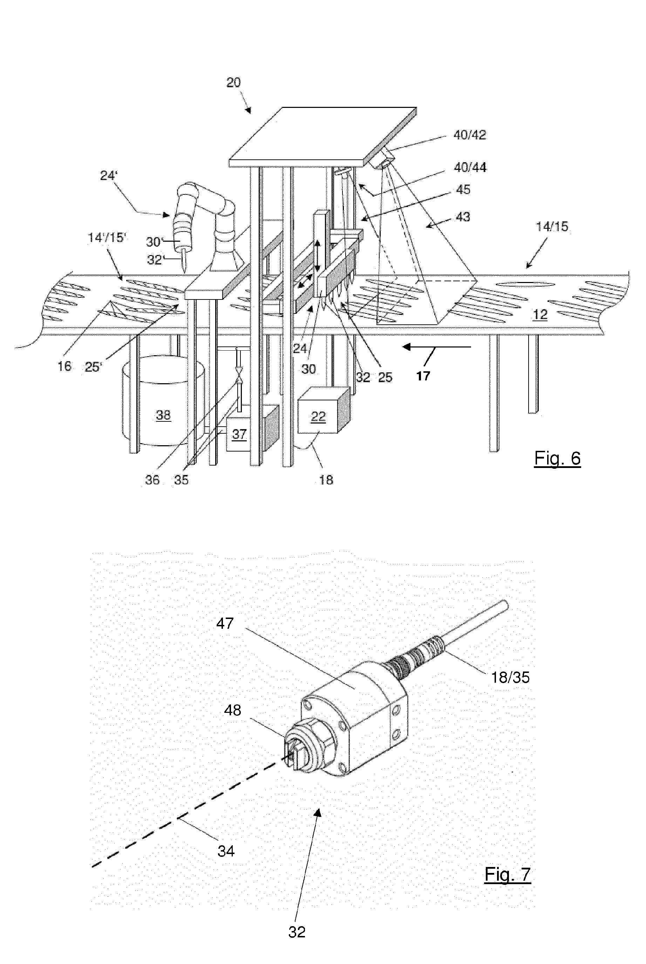

Als Schneidelemente 32 können, wie in diesem Beispiel, Messer vorgesehen sein, die vorzugsweise aus verschleissfestem Material bestehen bzw. verschleissfest beschichtet sind. Es können aber auch Spritzdüsen als Schneidelemente 32 vorgesehen sein, wie dies in Fig. 6-11 dargestellt ist. Die Schneidelemente 32 können in der Schneideinheit 30 starr fixiert sein, oder aber verschwenkbar in der Schneideinheit 30 gelagert sein. Dies gilt für das hier gezeigte Beispiel mit den Messern ebenso wie für die Beispiele der Fig. 6 bis 11 mit den Spritzdüsen als Schneidelemente 32.

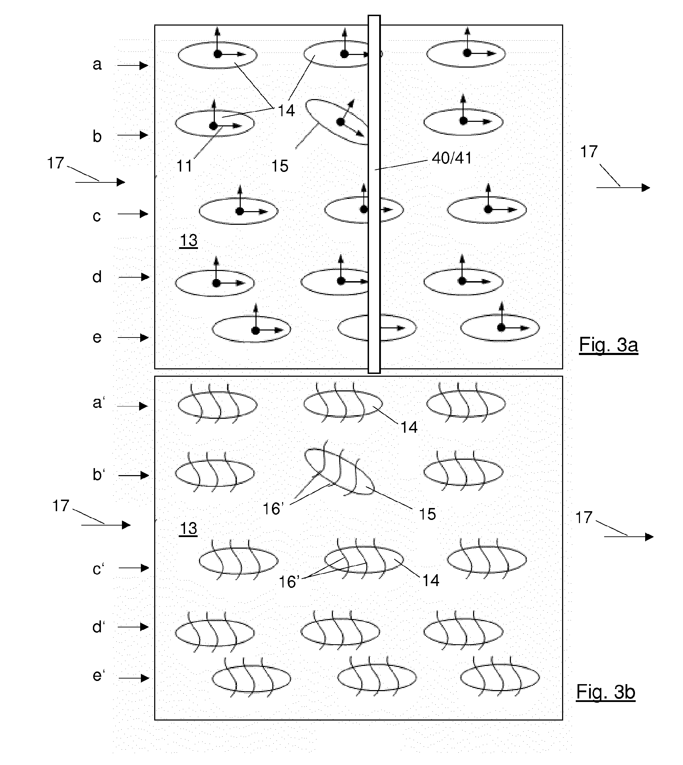

Die Steuereinheit 22 ist so konfiguriert, dass der Manipulator 24 und die Schneideinheit 30 mit dem oder den Schneidelementen 32 so in ihrer Bewegung und Schneidaktivität gesteuert werden, dass abhängig von den durch die Sensorik 40 bestimmten Positionen und räumlichen Lagen (räumliche Lage = räumliche Ausrichtung, Pfeile 11 (Fig. 2, 3a, 3b)) der einzelnen Teiglinge 14, 15, alle Teiglinge 14, 15 mit dem für einen Teigling 14, 15 vorgegebenen Muster geschnitten bzw. eingeritzt werden. Bewegung und Schneidaktivität des Manipulators 24 bzw. der Schneidelemente 32 und die Fördergeschwindigkeit des Fördersystems 12 sind dabei aufeinander abgestimmt, wobei das Fördersystem 12 auch angehalten werden und in diesem Sinne diskontinuierlich gearbeitet werden kann. Auch dies gilt natürlich in der jeweils sinnvollen Weise für alle hier beschriebenen Beispiele und mögliche weitere Varianten.

Schneidaktivität heisst hier, dass das oder die Schneidelemente 32 abgestimmt auf die jeweilige Beschaffenheit der Teiglinge 14, 15 aktiviert werden. Bei Spritzdüsen heisst das, dass das Schneidfluid mit auf die Teiglinge und das Schnittebild angepasstem, wo nötig auch variabel geregeltem Druck kontinuierlich oder gepulst für jene Zeitdauer, während die Schneidelemente 32 die Trajektorie(n) für das vorgegebene Schnittbild ausführen, aktiv und ihre Ventile entsprechend geöffnet sind, während die Ventile zu anderen Zeiten vorzugsweise geschlossen sind. Bei Messern heisst dies, dass die Messer angepasst an die Beschaffenheit der Teiglinge 14, 15 in den Teig eingedrückt oder ritzend über den Teig geführt werden mit einer dem vorgegebenen Schnittbild entsprechenden Tiefe und Linienführung (Trajektorie(n)).

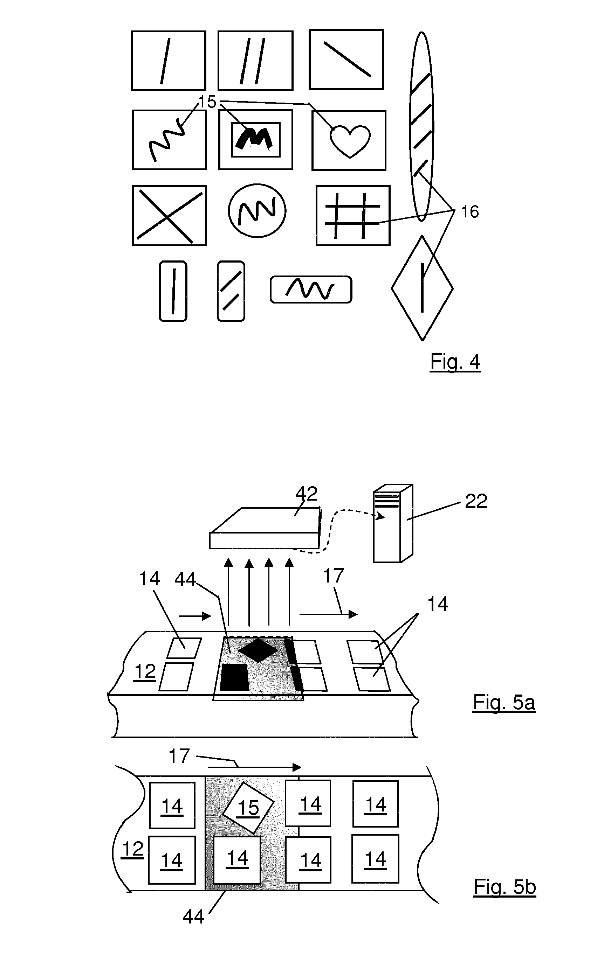

Typische Schnittbilder und Formen für Teiglinge die mit der Schneidvorrichtung erzielt werden können, sind in Fig. 4 dargestellt. Werden statt Messer, Spritzdüsen als Schneidelemente eingesetzt, so können die Teiglinge mit einem mittels der Spritzdüsen gegen die Teiglinge gespritzten, unter Druck stehenden Schneidfluid durchgeschnitten, figürlich gestaltet, beschriftet und mit komplexen Mustern 15 und dergleichen versehen werden und nicht nur mit geraden oder wellenförmigen Schnitten bzw. Einritzungen 16.

Das Beispiel der Fig. 3a zeigt Teiglinge 14, 15, die in Förderrichtung 17 gefördert und von einem taktilen Sensor 41 in ihrer Position und räumlichen Lage bzw. räumlichen Ausrichtung (Pfeile 11) erfasst werden. Der taktile Sensor 41 ist in diesem Beispiel in Form einer Pinselleiste ausgestaltet, die sich etwa im 90°-Winkel quer zur Förderrichtung 17 über die gesamte Breite der Förderbahn erstreckt. Haare der Pinselleiste, welche gegen die Teiglinge ausgerichtet sind, sind mit Auslenkungs- und Widerstandsmessern (nicht dargestellt) verbunden, um die Teiglinge 14, 15 zu ertasten. Der taktile Sensor 41 kann entweder als einziger Sensor der Sensorik 40 für die Detektion der Teiglinge 14, 15 verwendet werden oder aber zusammen mit anderen Sensoren, wie Kamera oder Laserdistanzmesser. Die Messdaten der Widerstands- und Auslenkungsmesser der Haare des taktilen Sensors 41 werden an die Steuereinheit (hier nicht dargestellt) übermittelt bzw. die Position und zumindest eine ertastete zweidimensionale Ausrichtung der Teiglinge 14, 15. Zusammen mit den Daten über die Fördergeschwindigkeit des Fördersystems 12 bestimmt die Steuereinheit daraus die nötige Bewegungsgeschwindigkeit und die Schneidaktivität des oder der Schneidelemente 32 der Schneideinheit 30 sowie die nötigen Trajektorien 16', wie sie in Fig. 3b dargestellt sind, so dass jeder Teigling 14, 15 entsprechend seiner jeweiligen Position und räumlichen Ausrichtung eingeschnitten bzw. eingeritzt wird. Das heisst, dass die Teiglinge 14, 15 der Reihen a, b, c, d, e (Fig. 3a) ohne Veränderung Ihrer Lage und Position (siehe Fig. 3b: Reihen a', b', c', d', e') als eingeschnittene Teiglinge 14', 15' mit präzise nach dem vorgegebenen Schnittbild eingebrachten Schnitten bzw. Einritzungen 16 aus der Schneidvorrichtung 20 hinausgefördert werden (siehe z.B. auch Fig.1).

Eine weitere Ausführungsform einer Sensorik 40 zur Erkennung der Position und zweidimensionalen Ausrichtung der Teiglinge 14, 15 ist in den Fig. 5a, 5b gezeigt. Die Teiglinge werden auf dem Fördersystem 12 mit Hilfe eines transparenten oder teiltransparenten Förderbandes in Förderrichtung 17 transportiert und dabei unterhalb eines optischen Sensors, insbesondere einer Kamera 42, über einen Leuchttisch 44 gefördert, so dass die Teiglinge 14, 15 von ihrer Rückseite beleuchtet werden und ihr Schattenbild klar ihre jeweilige Position auf dem Band und ihre zweidimensionale Ausrichtung erkennen lässt. Ein solches Durchlichtverfahren eignet sich besonders gut für eher zweidimensionale Teiglinge, wie z.B. Lasagneblätter oder Maultaschen, Gemüsebrätlinge. Position und Ausrichtung werden dann entweder bereits durch die Sensorik 40 aus den erfassten Daten ermittelt und zur Steuerung des Schneidorgans 21 an die Steuereinheit 22 weitergegeben oder die Basisdaten werden in der Steuereinheit 22 in Position und Lage der Teiglinge 14, 15 umgerechnet und zur Steuerung des Schneidorgans 21 der Schneidvorrichtung 20 genutzt.

In Fig. 6 ist perspektivisch eine weitere Ausführungsform einer Schneidvorrichtung 20 dargestellt. Bei dieser Ausführungsform ist das Fördersystem 12 als Förderband ausgebildet, auf dem die Teiglinge, z.B. in Form von Baguette liegen. Die Sensorik 40 ist in diesem Beispiel durch eine Kamera 42 mit einem Sichtfeld 43 und eine Laserdistanzmesseinheit 44 mit einem über die gesamte breite des Förderbandes 12 reichenden, gefächerten Laserstrahl 45 realisiert. Mittels der Kamera 42 werden die zweidimensionale Ausrichtung und die Position der Teiglinge, 14, 15 auf dem Förderband bestimmt, während mit Hilfe der Laserdistanzmessvorrichtung 44 die dritte Dimension, welche aus der Förderebene heraustritt, erfasst wird. Eine solche Erfassung der dritten Dimension ist sinnvoll bei Teiglingen mit einer grösseren dritten Dimension, wie z.B. bei Brotleiben, welche unter Umständen auch manchmal auf der Seite liegen können.

Die Sensorik 40 ist, wie bereits im Zusammenhang mit Fig. 2 erläutert, mittels einer Datenleitung 18 mit einer Steuereinheit 22 der Schneidvorrichtung 20 verbunden. Die Steuereinheit 22 steht ihrerseits wieder mit dem Schneidorgan 21 der Schneidvorrichtung 20 im Datenaustausch, so dass mittels der Steuereinheit 22 das Schneidorgan 21 abhängig von der mittels der Sensorik 40 bestimmten Ist-Lage der Teiglinge 14, 15 und einem Vergleich mit ihrer Soll-Lage das Schneidorgan 21 so gesteuert werden kann, dass alle Teiglinge 14', 15' mit präzisen Schnitten bzw. Einritzungen 16 für ein präzises Schnittbild versehen werden.

Bei der hier gezeigten Ausführungsform weist das Schneidorgan 21 zwei Manipulatoren 24, 24' auf, wobei jener erster Manipulator 24, in dessen Schneidbereich 25 die Teiglinge 14, 15 zuerst gefördert werden, als kartesischer Roboter mit Portalaufbau und zwei Freiheitsgraden ausgebildet ist. Ein Freiheitsgrad ergibt sich durch eine laterale Verschiebbarkeit der Schneideinheit 30 mit den Schneidelementen 32 quer zum Förderband etwa im 90°-Winkel zur Förderrichtung 17, und der zweite Freiheitsgrad durch eine laterale Verschiebbarkeit dieser Schneideinheit 30 aus der Förderebene heraus, wodurch gewährleistet ist, das Teiglinge unterschiedlicher Form in der Schneidvorrichtung 20 bearbeitet werden können.

Die Soll-Ordnung der zu bearbeitenden Teiglinge ist hier, wie in den meisten Fällen, eine Anordnung der Teiglinge in Reihen und Linien, mit genau definierten Abständen der Teiglinge zueinander in Förderrichtung 17 und quer zur Förderrichtung 17. Die Schneideinheit 30 des ersten Manipulators 24 weist daher eine Reihe von Schneidelementen 32 auf, die ungefähr im 90°-Winkel quer zur Förderrichtung nebeneinander angeordnet sind, wobei die Distanz der Schneidelemente 32 zueinander auf den Soll-Abstand, den die Teiglinge zueinander quer zur Förderrichtung 17 haben sollen, abgestimmt ist.

Werden die Teiglinge 14, 15 durch den Schneidbereich 25 des ersten Manipulators 24 gefördert, werden mit Hilfe der nebeneinander angeordneten Schneidelemente 32 des ersten Manipulators 24 nur die normalen Teiglinge 14 - deren Ist-Lage innerhalb der vorgegebenen Toleranz der Soll-Lage entspricht - geschnitten bzw. eingeritzt.

Dem Ersten Manipulator 24 auf der Förderstrecke nachgeordnet ist ein zweiter Manipulator 24' vorgesehen, der in diesem Beispiel als Knickarmroboter mit 6 Freiheitsgraden ausgebildet ist. Dieser zweite Manipulator 24' weist eine Schneideinheit 30' mit nur einem Schneidelement 32' auf, und dient dem Schneiden bzw. Einritzen der abweichenden Teiglinge 15, so dass schliesslich eingeritzte Teiglinge 14', 15' die Schneidvorrichtung verlassen, welche präzise Schnittbilder mit präzise ausgeführten Schnitten 16 aufweisen. Es versteht sich, dass natürlich auch dieser zweit Manipulator 24' mit der Steuereinheit in Verbindung steht und entsprechend der Fördergeschwindigkeit des Förderbandes 12 und entsprechend der detektierten Ist-Lagen der Teiglinge 14, 15, und insbesondere entsprechend der Lage und Position der abweichenden Teiglinge 15 gesteuert wird.

In dem hier gezeigten Beispiel sind die Schneidelemente 32, 32' der beiden Manipulatoren 24, 24' als Spritzdüsen ausgebildet, die über eine Zuleitung 35, in der ein zentrales Absperrventil 36 vorgesehen ist, mit einer Förderpumpe 37 und über die Förderpumpe 37 mit einem Fluidbehälter 38 verbunden sind. Im Fluidbehälter 38 ist ein Schneidfluid gespeichert, das mittels der Förderpumpe 37 mit einem Druck von bis zu 40 bar den Spritzdüsen 32, 32' zugeführt wird. Die einzelnen Spritzdüsen 32, 32' sind jeweils ebenfalls mit einem Ventil versehen (nicht dargestellt), so dass das verspritzen des unter Druck stehenden Schneidfluids für jede Spritzdüse einzeln gesteuert und insbesondere an- und abgestellt werden kann.

Um den Verbrauch von Schneidfluid minimal zu halten, werden beispielsweise zwischen zwei Reihen von Teiglingen die Spritzdüsen 32 des ersten Manipulators 24 jeweils durch Absperren ihrer Ventile deaktiviert. Auch wenn unter einer der Spritzdüsen 32 des ersten Manipulators 24 ein abweichender Teigling 15 hindurch gefördert wird, wird die entsprechende Spritzdüse durch Absperren ihres Ventils deaktiviert. Dafür wird im Anschluss die Spritzdüse 32' des zweiten Manipulators 24' durch Öffnen des entsprechenden Ventils dieser Spritzdüse 32' diese Spritzdüse 32'aktiviert und entlang der nötigen Trajektorie so geführt, dass auch der abweichende Teigling 15 entsprechend des vorgegebenen Schnittbildes eingeschnitten wird. Schliesslich wird durch Schlissen des Ventils der Spritzdüse 32' diese wieder deaktiviert. Gibt es in einer Reihe von Teiglingen mehr als einen abweichenden Teigling 15, so kann die Fördergeschwindigkeit so angepasst werden, dass alle abweichenden Teiglinge 15 mit Hilfe des zweiten Manipulators 24' noch geschnitten werden können. Nötigenfalls kann das Förderband 12 auch ganz angehalten und diskontinuierlich gearbeitet werden. Ist die Wahrscheinlichkeit für das Vorkommen von abweichenden Teiglingen z.B. aufgrund der Produktionsbedingungen hoch, so können mehr als zwei Manipulatoren vorgesehen sein. Je nach vorgegebenem Muster/Schnittbild ist der zweite Manipulator auch mit mehr als einem Schneidelement versehen.

In Fig. 7 ist ein Beispiel für ein als Spritzdüse ausgebildetes Schneidelement 32 abgebildet, das typischer Weise mit einem Spritzdüsenventil 47 versehen ist, welches eine Düse 48 der Spritzdüse mit der Zuleitung 35 für das Fluid verbindet, und welches über die Datenleitung 18 mit der Steuereinheit verbunden ist. Die Düse 48 ist vorzugsweise auswechselbar oder in Ihrem Querschnitt einstellbar, so dass die Form und der Durchmesser und damit auch der Druck eines verspritzten Fluidstroms 34 einstellbar ist. Der Druck ist natürlich auch mittels der Pumpe 37 einstell- bzw. regelbar, wie oben beschrieben.

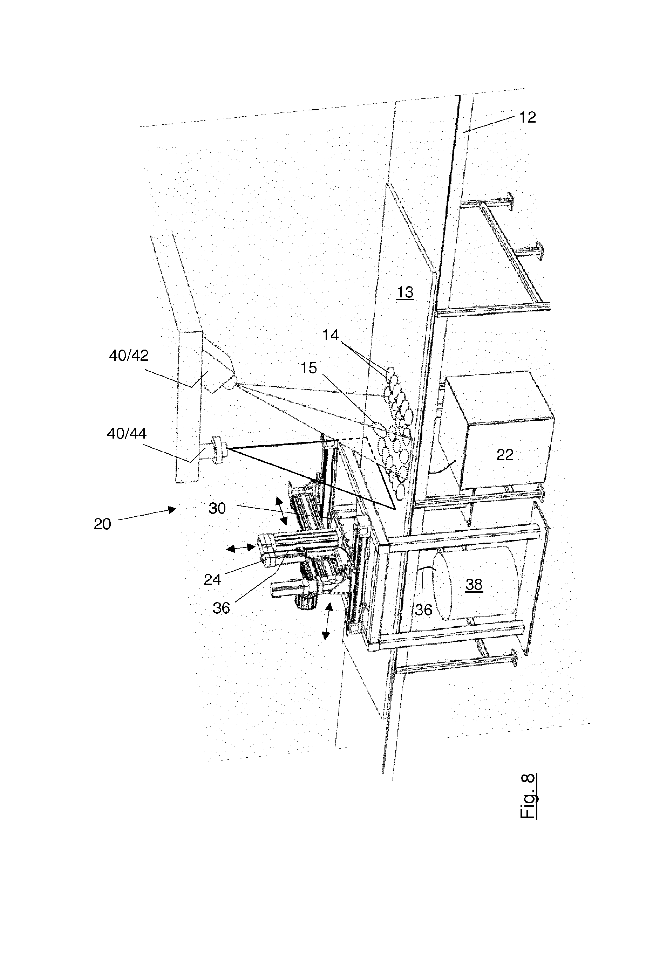

Die Schneidvorrichtungen der Fig. 8-12 sind im Prinzip alle gleich aufgebaut, wie jene der Figur 6, also mit Sensorik 40, Steuereinheit 22, und einem Schneidorgan 21, dass dem Schneiden mittels Schneidfluid dient. Allerdings weisen diese Schneidvorrichtungen jeweils nur einen Manipulator 24 mit als Spritzdüsen ausgebildeten Schneidelementen 32 auf, wobei der Manipulator 24 in den unterschiedlichsten Formen ausgestaltet sein kann.

Fig. 8 zeigt beispielsweise eine Schneidvorrichtung mit einem kartesischen Portalroboter als Manipulator 24, der aber im Gegensatz zu demjenigen aus Fig. 6 drei Freiheitsgrade aufweist, also einen durch laterale Verschiebbarkeit in Richtung der Förderrichtung 17, einen Freiheitsgrad durch laterale Verschiebbarkeit etwa im 90°-Winkel quer zur Förderrichtung und eine durch laterale Verschiebbarkeit in einem etwa 90°-Winkel aus der Förderebene heraus. Die Sensorik 40 beinhaltet wie in Fig. 6 eine Laserdistanzmesseinheit 44 und eine Kamera 42. Durch den dritten Freiheitsgrad des Manipulators in Förderrichtung 17, ist es möglich mit diesem Manipulator 24 und seinen Schneidelementen 32 normale Teiglinge 14 in einem ersten Arbeitsschritt zu bearbeiten und abweichende Teiglinge 15 in einem separaten zweiten Arbeitsschritt einzuritzen bzw. zu schneiden.

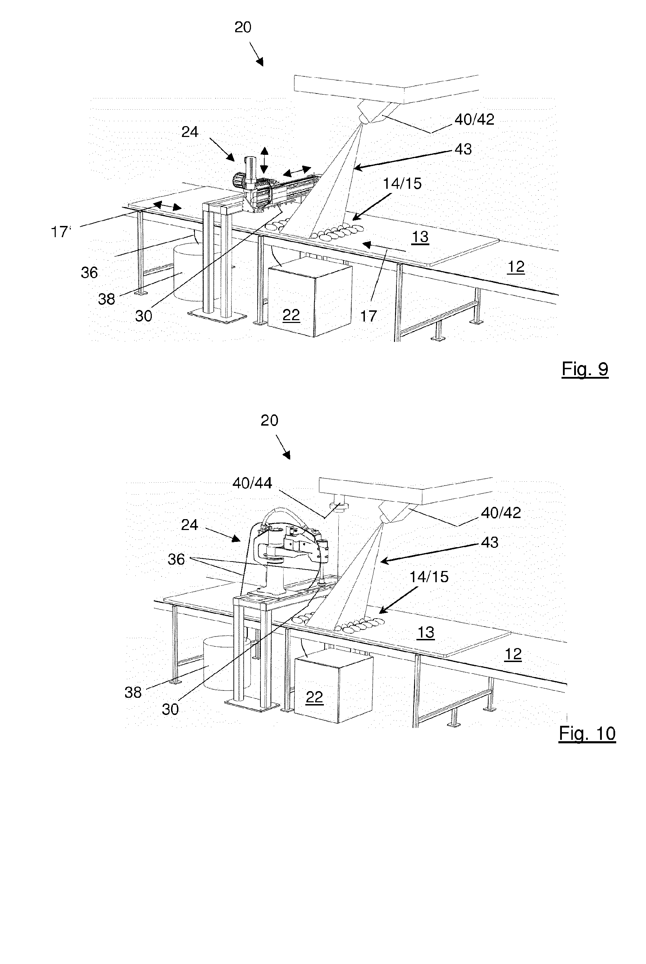

In Fig. 9 ist die Sensorik auf eine rein zweidimensionale Erfassung der Lage und Position der Teiglinge 14, 15 mittels einer einzelnen Kamera 42 ausgelegt. Der Manipulator 24 ist als kartesischer Portalroboter mit zwei Freiheitsgraden ausgebildet mit einem Freiheitsgrad aus der Förderebene hinaus und einem Freiheitsgrad in einem etwa 90°-Winkel quer zur Förderrichtung. Um abweichende Teiglinge einritzen zu können muss hier das Förderband in diskontinuierlicher Weise angehalten und unter Umständen auch entgegen der eigentlichen Förderrichtung 17 bewegt werden (Doppelpfeil 17').

In Fig. 10 umfasst die Sensorik 40 wieder Kamera 42 und Laserdistanzmesseinheit 44 zur dreidimensionalen Erfassung von Position und Lage der Teiglinge 14, 15. Der Manipulator 24 ist als SCARA Roboter ausgebildet, der stehend auf einem Portal platziert ist, welches sich in einem etwa 90°-Winkel quer zur Förderrichtung erstreckt.

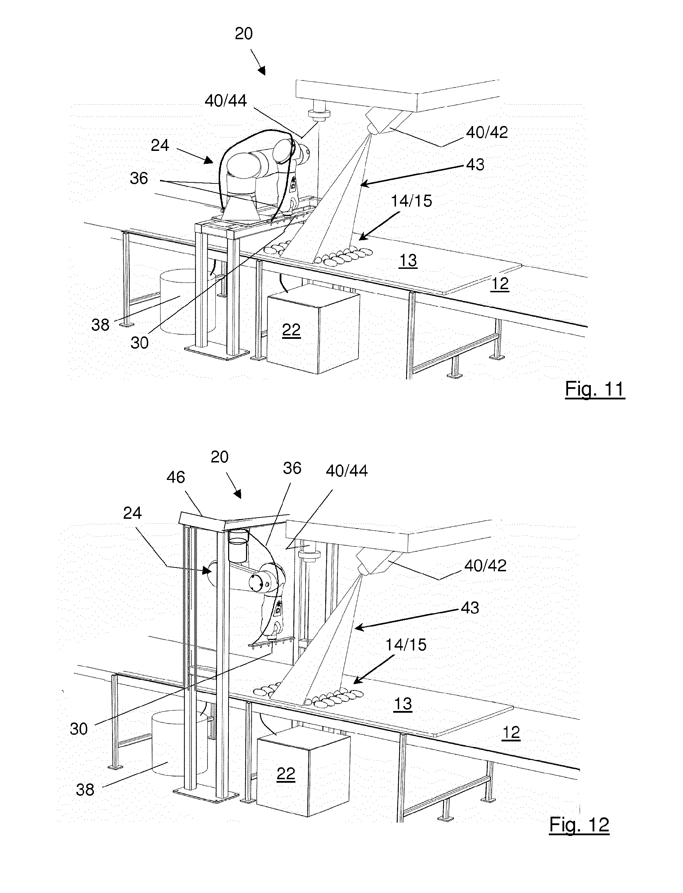

Das Ausführungsbeispiel der Schneidvorrichtung 20, welches in Fig. 11 dargestellt ist, ist ausgestaltet, wie jenes der Fig. 10 nur dass statt des SCARA Roboters, ein Knickarmroboter als Manipulator 24 vorgesehen ist.

Fig. 12 macht deutlich, dass der Manipulator 24 statt auf einem Portal stehend, welches sich quer zur Förderrichtung 17 erstreckt, der Manipulator 24 auch an einem sich quer zur Förderrichtung 17 erstreckenden Portal hängend vorgesehen sein kann. In diesem Beispiel handelt es sich um einen Kickarmroboter, der an dem Portal hängend vorgesehen ist, genauso gut könnte aber auch ein SCARA Roboter vorgesehen sein.

Auch andere Manipulatoren beispielsweise mit Parallelkinematik (nicht dargestellt) sind einsetzbar.

Die Schneideinheit 30 mit den Schneidelementen 32 ist vorzugsweise als auswechselbares Element ausgestaltet und anpassbar an die zu bearbeitenden Teiglinge 14, 15 mit dem Manipulator 24, 24' verbindbar.

Auch die Schneidelemente 32 selber sind vorzugsweise auswechselbar in der Schneideinheit vorgesehen. Die Schneidelemente können automatisch durch den Manipulator gewechselt werden um die Schneidelemente zyklisch zu reinigen oder um automatisch im laufenden Betrieb auf andere Schnittarten umzurüsten.

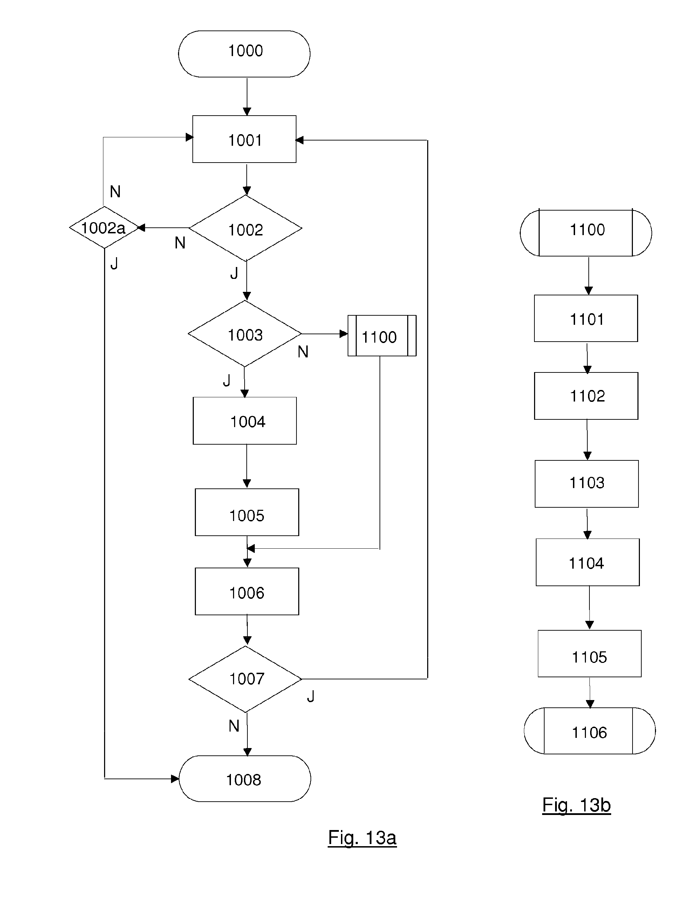

Unabhängig davon, ob die Schneidvorrichtung 20 mit einem Manipulator oder zwei Manipulatoren versehen ist, und ob an dem einen oder beiden Manitpulatoren jeweils ein oder mehrere Schneidelemente (Messer oder Spritzdüsen) vorgesehen sind oder ob der erste Manipulator ein oder mehrere nebeneinander angeordnete Schneidelemente und der nachgeordnete zweite Manipulator ein, zwei oder mehr Schneidelemente aufweist, die Abfolge der Verfahrensschritte, die in der Schneidvorrichtung ausgeführt werden, sind im Prinzip immer ähnlich und sollen im Folgenden anhand des Flussdiagramms der Fig. 13a, 13b beispielhaft erläutert werden:
Das Verfahren startet bei 1000; Schritt 1001 steht für ein Fördern der Teiglinge 14, 15 in den von der Sensorik 40 erfassbaren Bereich 43/45.

In einem optionalen Schritt 1002 wird geprüft ob sich Teiglinge 14, 15 in dem von der Sensorik 40 erfassbaren Bereich 43/45 befinden. Wird diese Frage verneint, wird geprüft ob dies zum wiederholten Mal der Fall ist 1002a, bzw. seit welchem Zeitraum dies der Fall ist. Ist eine vorher definierte Grenze noch nicht erreicht (Zeitgrenze oder Anzahlgrenze der Wiederholungen, wie oft keine Teiglinge detektiert werden), läuft das Fördersystem weiter 1001 bis entweder Teiglinge 14, 15 im Sensorbereich 43/45 detektiert werden oder bis die vorher gesetzte Zeitgrenze oder die gesetzte Grenze der Anzahl an Wiederholungen erreicht wird, so dass das Fördersystem 12 abgestellt wird 1008, um Energie zu sparen.

Unabhängig, ob die optionale Prüfung 1002/1002a, wie sie oben beschrieben ist, erfolgt oder nicht, erfasst die Sensorik 40 was sich in ihrem Sensorbereich 43/45 befindet und vergleicht 1003 dies mit vorgegebenen Daten für eine vorgegebene Soll-Ordnung für Teiglinge 14, 15, die beispielsweise in einem Speicher der Steuereinheit 22 hinterlegt ist. Befinden sich Gegenstände in ihrem Sensorbereich 43/45 werden diese in ihrer Position und räumlichen Ausrichtung mit der Ausrichtung und Position der Teiglinge in der Soll-Ordnung verglichen 1003, das heisst die Objekte/Teiglinge 14, 15 auf dem Fördersystem 12 werden in Ihrer Ist-Position mit der Soll-Position verglichen 1003 und es werden auch die Abweichungen von der Soll-Position bestimmt, beispielsweise mittels Bilderkennungsverfahren, Laser 3D-Erkennung; Vergleich kartesischer Koordinaten. Werden nur normale Teiglinge 14 (z.B. in einer quer zur Förderrichtung ausgerichteten Reihe von Teiglingen) detektiert, also Teiglinge 14, deren Ist-Positionen innerhalb einer vorgegebenen Toleranz zur Soll-Position liegen, werden die Schneidelemente 32 mit Ihrer Bewegungsbahn, Geschwindigkeit und Schneidaktivität entsprechend der Ist-Positionen feinjustiert bzw. optimiert 1004. Die Schneidelemente 32 werden aktiviert (z.B. die Ventile 37 der entsprechenden Spritzdüsen geöffnet oder die entsprechenden Messer zum Schneiden in der Schneideinheit 30 auf eine Aktivposition verschwenkt) und die normalen Teiglinge 14 werden gemäß dem vorprogrammierten Muster/Schnittbild eingeritzt bzw. geschnitten 1005. Alle eingeritzten bzw. geschnittenen Teiglinge 14', 15' werden von der Schneidvorrichtung 20 weg gefördert 1006, und falls die Produktion weiter gehen soll 1007 werden- entweder anschliessend oder währenddessen - die nächsten Teiglinge 14, 15 in den Sensorbereich 43/45 der Schneidvorrichtung 20 gefördert 1001. Andernfalls wird das Programm beendet und beispielsweise die Schneidvorrichtung 20 sowie das Fördersystem 12 ausgeschalten 1008.

Werden dagegen im Sensorbereich 43/45 neben den normalen Teiglingen auch abweichende Teiglinge 15 detektiert 1003, also Teiglinge 15, deren Ist-Position mehr als eine vorgegebenen Toleranz von der Soll-Position abweichen, wird ein Unterprogramm 1100 gestartet.

Für die normalen Teiglinge 14 werden entsprechend der Ist-Positionen dieser normalen Teiglinge 14 die Schneidelemente 32 mit Ihrer Bewegungsbahn, Geschwindigkeit und Schneidaktivität feinjustiert bzw. optimiert 1101 und die zum Schneiden bzw. Einritzen der normalen Teiglinge 14 nötigen Schneidelemente 32 werden aktiviert (z.B. die Ventile 37 der entsprechenden Spritzdüsen geöffnet oder die entsprechenden Messer zum Schneiden in der Schneideinheit 30 auf eine Aktivposition verschwenkt) während die andern Schneidelemente 32 nicht aktiviert werden (Messer nicht in Aktivposition, Ventile 47 der entsprechenden Spritzdüse bleiben versperrt) und die normalen Teiglinge 14 werden gemäß dem vorprogrammierten Muster/Schnittbild eingeritzt bzw. geschnitten 1102.

Danach oder gleichzeitig werden für die abweichenden Teiglinge 15, die Position und die Ausrichtung der abweichenden Teiglinge 15 bestimmt 1103. Daraus abgeleitet werden die Bewegungsbahn und Geschwindigkeit der für das Schneiden bzw. Einritzen der abweichenden Teiglinge 15 nötigen Schneidelemente 32 des ersten Manipulators 24 oder falls vorhanden des zweiten Manipulators 24' sowie falls nötig die Geschwindigkeit und Förderrichtung des Fördersystems 12 bestimmt 1104, um die nicht-ideal ausgerichteten, bzw. nicht ideal positionierten Teiglinge 15 mit dem vorgegebenen Muster zu versehen. Nachdem alle normalen Teiglinge 14 geschnitten bzw. eingeritzt sind 1102, werden der Manipulator 24, 24', die nötigen Schneidelemente 32, 32' und, wo nötig, auch das Fördersystem 12 derart aufeinander abgestimmt sowie auf die Ist-Position der abweichenden Teiglinge 15 und das vorgegebene Muster/Schnittbild abgestimmt gesteuert, dass auch der oder die abweichenden Teiglinge 15 präzise geschnitten bzw. eingeritzt werden 1105. Damit ist das Unterprogramm beendet 1106 und alle eingeritzten bzw. geschnittenen Teiglinge 14', 15' werden von der Schneidvorrichtung 20 weg gefördert 1006. Falls die Produktion weiter gehen soll 1007 werden die nächsten Teiglinge 14, 15 in den Sensorbereich 43/45 der Schneidvorrichtung 20 gefördert 1001. Andernfalls wird das Programm beendet und beispielsweise die Schneidvorrichtung 20 sowie das Fördersystem 12 ausgeschalten 1008.

Der Schritt der Feinjustierung 1004, 1101 ist nicht zwingend und kann also auch weggelassen werden, so dass zum Schneiden bzw. Einritzen die normalen Teiglinge 14 (die mit ihrer Ist-Position nur innerhalb einer vorgegebenen Toleranz von der Soll-Position abweichen) die Schneidelemente 32 entsprechend dem vorgegebenen Muster und der durch die Soll-Position vorgegebenen Bewegungsbahn, in ihrer Bewegung, Schneidaktivität und Geschwindigkeit (Manipulator 24 und gegebenenfalls auch Fördersystem 12) gesteuert werden.

In den oben gegebenen Ausführungen sind verschiedene Details beispielhaft in Kombination miteinander gezeigt und/oder beschrieben worden. Dies bedeutet jedoch nicht, dass diese nur in der gezeigten und/oder beschriebenen Form miteinander kombiniert werden können. Der Fachmann weiß, in welcher Weise sich Details der vorangehend gezeigten und/oder beschriebenen Ausführungsformen der Erfindung sinnvoll miteinander kombinieren lassen, auch wenn hier aus Platzgründen nicht alle Kombinationen dargestellt werden konnten.

Wie gezeigt werden konnte ist es mit dem erfindungsgemäßen Gerät bzw. dem erfindungsgemässen Verfahren möglich den Ausschuss an Teiglingen, welche aufgrund ihrer Position und räumlichen Lage ein unpräzises Schnittmuster aufweisen, zu minimieren. Auch die Menge an benötigtem Schneidfluid-wenn denn mit Schneidfluid gearbeitet wird - wird mit einer solchen Vorrichtung und einem solchen Verfahren reduziert, da nur zu Zeiten, in denen geschnitten wird, und nur für Spritzdüsen, die wirklich aktiv am Schneidprozess beteiligt sind, die Ventile geöffnet sind und Schneidfluid verspritzt wird. Auch kann das Schneidfluid in seinem Druck der Beschaffenheit der Teiglinge angepasst und reguliert werden, was den Verbrauch an Schneidfluid ebenfalls reduziert und ein Auffangen von überschüssigem Schneidfluid bzw. eine Wiederaufbereitung nahezu oder tatsächlich unnötig macht.

## Patentansprüche

1. Verfahren zum Einbringen von Schnitten bzw. Einritzungen (16) in Teiglinge (14, 15) oder andere Lebensmittel (wobei nachfolgend alles (nämlich Teiglinge oder andere Lebensmittel) unter dem Begriff Teigling zusammengefasst ist) nach vorgegebenen Mustern mittels eines Schneidorgans (21) einer Schneidvorrichtung (20), wobei
• die Teiglinge (14, 15) durch einen Schneidbereich (25) der Schneidvorrichtung (20) hindurch gefördert werden;
• die Teiglinge (14, 15) detektiert werden;
• und im Schneidbereich (25) mit Hilfe des Schneidorgans (21) der Schneidvorrichtung (20) geschnitten bzw. eingeritzt werden; wobei
• eine Schneidaktivität des Schneidorgans (21) abhängig von der Detektion der Teiglinge (14, 15) ausgelöst wird,
**dadurch gekennzeichnet, dass**
• die Position und räumliche Lage der Teiglinge (14, 15) sensorisch bestimmt wird, und
• das Schneidorgan (21) abhängig von der Position und der räumlichen Lage der einzelnen Teiglinge (14, 15) so in seiner Bewegung und Schneidaktivität gesteuert wird, dass alle Teiglinge (14, 15) mit dem für einen Teigling vorgegebenen Muster geschnitten bzw. eingeritzt werden.

2. Verfahren nach Anspruch 1,
**dadurch gekennzeichnet, dass**
die Position und räumliche Lage der Teiglinge (14, 15) zwei- oder dreidimensional detektiert wird.

3. Verfahren nach Anspruch 1 oder 2,
**dadurch gekennzeichnet, dass**
die Position und räumliche Lage der Teiglinge (14, 15) optisch erfasst wird insbesondere mittels einer oder mehrerer Kameras (42, 42') und/oder mittels einer oder mehrer Laserdistanzmesseinrichtung (44), und/oder tastend mittels eines oder mehreren taktilen Sensoren (41), wobei insbesondere Pinsel als taktile Sensoren verwendet werden.

4. Verfahren nach einem der Ansprüche 1 bis 3,
**dadurch gekennzeichnet, dass**
eine "Ist-Lage", das heisst eine tatsächliche Position und räumliche Lage der Teiglinge (14, 15) bestimmt wird und mit einer vorher festgelegten "Soll-Lage" der Teiglinge verglichen wird und eventuelle Abweichungen in Position und räumlicher Lage inklusive der Grössenordnung der Abweichungen bestimmt und mit einem Toleranzwert verglichen wird, wobei jene als normale Teiglinge (14) bezeichneten Teiglinge, deren Ist-Lage von der Soll-Lage um weniger abweicht als ein vorher festgelegte Toleranzwert, in einem ersten Arbeitsschritt entsprechend dem vorgegebenen Muster geschnitten bzw. eingeritzt werden, während jene als abweichende Teiglinge (15) bezeichneten Teiglinge, deren Ist-Lage von der Soll-Lage mehr als der vorher festgelegte Toleranzwert abweicht, in einem gesonderten Arbeitsschritt durch Schneiden bzw. Einritzen mit dem vorgesehenen Muster versehen werden.

5. Verfahren nach Anspruch 4,
**dadurch gekennzeichnet, dass**
das Schneidorgan (21), mit einer Reihe benachbarter Schneidelemente (32, 32') versehen ist und die normalen Teiglinge (14) synchron mittels der Schneidelemente (32) mit dem vorgesehenen Muster versehen werden, während für den gesonderten Arbeitsschritt das Schneidorgan (21) entsprechend einer anhand der Ist-Lage des entsprechenden abweichenden Teiglings berechneten Unterprogramms gesteuert wird, wobei das Unterprogramm eine anhand der Ist-Lage des abweichenden Teiglings (15) berechnete individuelle Trajektorie des Schneidorgans (21) mit entsprechender Bewegungsgeschwindigkeit und Schneidaktivität des oder der passenden Schneidelemente (32, 32') umfasst.

6. Verfahren nach einem der Ansprüche 4 oder 5,
**dadurch gekennzeichnet, dass**
wobei das Schneidorgan (21) einen Manipulator (24) aufweist, der ein oder mehrere Schneidelemente (32) trägt, wobei sowohl das Einritzen bzw. Schneiden der normalen Teiglinge (14) als auch der gesonderte Arbeitsschritt des Schneidens bzw. Einritzens der abweichenden Teiglinge (15) von diesem einen Manipulator (24) ausgeführt wird.

7. Verfahren nach einem der Ansprüche 4 oder 5,
**dadurch gekennzeichnet, dass**
das Schneidorgan (21) einen ersten Manipulator (24) mit wenigstens einem Schneidelement (32) und einen zweiten Manipulator (24') mit einem oder mehreren weiteren Schneidelementen (32') aufweist und der gesonderte Arbeitsschritt zum Schneiden bzw. Einritzen der abweichenden Teiglinge (15) von dem separat ansteuerbaren, zweiten Manipulator (24') ausgeführt wird.

8. Verfahren nach einem der vorhergehenden Ansprüche,
**dadurch gekennzeichnet, dass**
mittels unter Druck stehendem Schneidfluid geschnitten bzw. eingeritzt wird.

9. Verfahren nach einem der vorhergehenden Ansprüche,
**dadurch gekennzeichnet, dass**
mittels Schneidmessern geschnitten bzw. eingeritzt wird.

10. Schneidvorrichtung (20) zum Einbringen von Schnitten bzw. Einritzungen (16) in Teiglinge (14, 15) nach vorgegebenen Mustern umfassend:
• ein Schneidorgan (21) mit wenigstens einem Schneidelement (32, 32');
• ein Fördersystem (12) zum Fördern der Teiglinge (14, 15) durch einen Schneidbereich (25) des Schneidorgans (21) hindurch;
• eine Sensorik (40) zur Detektion der Teiglinge (14, 15);
• eine Steuereinheit (22), welche derart konfiguriert ist, dass sie eine Schneidaktivität des Schneidorgans (21) abhängig von der Detektion wenigstens einen Teiglings (14, 15) auslöst;
**dadurch gekennzeichnet, dass**
• die Sensorik (40) Sensorelemente (41, 42, 42', 44) zur Bestimmung der Position und räumlichen Lage der Teiglinge (14, 15) umfasst;
• das Schneidorgan (21) wenigstens einen Manipulator (24, 24') mit wenigstens einem Schneidelement (32, 32') umfasst,
• die Steuereinheit (22) derart konfiguriert ist, dass das wenigstens eine Schneidelement (32, 32') des Schneidorgans (21) mittels des Manipulators (24, 24') abhängig von den durch die Sensorik (40) bestimmten Positionen und räumlichen Lagen der einzelnen Teiglinge (14, 15) so in seiner Bewegung und Schneidaktivität steuerbar ist, dass alle Teiglinge (14, 15) mit dem für einen Teigling vorgegebenen Muster schneidbar bzw. einritzbar sind.

11. Vorrichtung nach Anspruch 10,
**dadurch gekennzeichnet, dass**
der Manipulator (24, 24') eine Reihe nebeneinander angeordneter Schneidelemente (32, 32') aufweist

12. Vorrichtung nach Anspruch 10 oder 11,
**dadurch gekennzeichnet, dass**
zwei Manipulatoren (24, 24') mit je wenigstens einem Schneidelement (32, 32') vorgesehen sind.

13. Vorrichtung nach einem der Ansprüche 10 bis 12,
**dadurch gekennzeichnet, dass**
dass die Sensorik (40) wenigstens eines der folgenden Elemente aufweist: eine oder mehrere Kameras (42, 42'), eine oder mehrere Laserdistanzmesseinheiten (44), einen oder mehrere taktile Sensoren (41).

14. Vorrichtung nach einem der Ansprüche 10 bis 13,
**dadurch gekennzeichnet, dass**
das oder die Schneidelemente (32, 32') als Spritzdüse(n) ausgebildet sind zum Schneiden oder Einritzen von Teiglingen (14, 15) mittels unter Druck stehender Schneidflüssigkeit, wobei die Spritzdüsen über wenigstens ein Ventil (36, 47) in flüssigkeitleitendem Kontakt mit einem Flüssigkeitsbehälter (38) und optional mit einer Förderpumpe (37) stehen, wobei das wenigstens eine Ventil (47, 36) und gegebenenfalls die Förderpumpe (37) von der Steuereinheit (22) steuerbar sind.

15. Vorrichtung nach einem der Ansprüche 10 bis 15,
**dadurch gekennzeichnet, dass**
der oder die Manipulatoren (24, 24') entsprechend einem der folgenden Elemente ausgebildet sind: kartesischer, Roboter, Knickarmroboter, SCARA Roboter; wobei diese elektrische, pneumatische oder hydraulische Antriebe aufweisen.

16. Teigling (14, 15)
**dadurch gekennzeichnet, dass**
er geschnitten ist bzw. Schnitte oder Einritzungen aufweist, welche mittels eines Verfahrens gemäss einem der Ansprüche 1 bis 9 und/oder mittels einer Schneidvorrichtung (20) gemäss einem der Ansprüche 10-15 eingebracht wurden.
